# EUROPÄISCHE PATENTANMELDUNG

(11) **EP 1 090 749 A2**
(43) Veröffentlichungstag der Anmeldung: **11.04.2001**
(21) Anmeldenummer: 00120810.7
(22) Anmeldetag: 23.09.2000
(51) Int. Cl.: B32B 31/26, B32B 15/06, C22F 1/00

(54) **Herstellung von Schichtverbunden mit superelastischem Effekt**

(30) Priorität: 07.10.1999 DE 19948199
(71) Anmelder: Stiftung Caesar Center of Advanced European Studies and Research, 53111 Bonn (DE)
(72) Erfinder: Quandt, Eckard, Dr., 53177 Bonn (DE); Winzek, Bernhard, 53173 Bonn (DE)
(74) Vertreter: COHAUSZ HANNIG DAWIDOWICZ & PARTNER

(57) **Zusammenfassung**

Die Erfindung betrifft ein Verfahren zur Herstellung von Schichtverbunden 6 mit zwei Formgedächtnisschichten 4 mit superelastischem Spannung-Dehnung-Verhalten und einer elastischen Zwischenschicht 5, wobei zunächst zwei Teilschichtverbunde 1 hergestellt werden, indem auf ein Substrat 2 eine Opferschicht 3 aufgebracht wird, auf die Opferschicht 3 eine Formgedächtnisschicht 4 aufgebracht wird und auf die Formgedächtnisschicht 4 eine Polymerschicht 5 aufgebracht wird. Anschließend werden die beiden Teilschichtverbunde 1 jeweils mit der Polymerseite 5 aneinanderliegend zu einem Schichtverbund 6 zusammengefügt, und die beiden Substrate 2 und die beiden Opferschichten 3 werden entfernt.

## Beschreibung

Die vorliegende Erfindung betrifft ein Verfahren zur Herstellung von Schichtverbunden mit zwei Formgedächtnisschichten mit superelastischem Spannung-Dehnung-Verhalten und einer elastischen Zwischenschicht.

Formgedächtniswerkstoffe zeichnen sich insbesondere dadurch aus, daß sie in einer Tieftemperaturphase (Martensit) verformt werden können und sich nach einer anschließenden Erwärmung in einer Hochtemperaturphase (Austenit) an diese Formgebung erinnern und die vorherige Form wieder annehmen.

Bestimmte Formgedächtniswerkstoffe zeigen innerhalb eines bestimmten Temperaturintervalls oberhalb eines charakteristischen Spannungswertes von etwa 200 MPa ein superelastisches Plateau in der Spannung-Dehnung-Kurve. Das bedeutet, daß dort die Rückstellkraft einer Feder aus diesem Material unabhängig vom Auslenkungszustand ist. Diese Eigenschaft ist besonders attraktiv für Anwendungen in der Medizintechnik, insbesondere in den Bereichen, wo Kräfte zur Wachstumskorrektur zeitlich konstant bleiben sollen.

Derartige Anforderungen erfüllen sowohl homogene Formgedächtnis-Bleche oder -Drähte als auch Verbunde, bei denen Formgedächtnisschichten einen elastischen Kern niedriger Steifigkeit umschließen. In beiden Fällen ist eine gewisse Vorspannung bzw. Vorkrümmung der Werkstoffe notwendig, um das superelastische Plateau zu erreichen. Bei homogenen Formgedächtnisblechen oder Drähten bleibt daher bei einer Biegung der innere, der neutralen Faser benachbarte Bereich elastisch, weil die Plateauspannung nicht erreicht wird. Demgegenüber ist der innere, aus einem Polymer bestehende Bereich bei einem Formgedächtnisschichtverbund grundsätzlich elastisch. Damit in diesem Fall das gesamte Verbundelement ein superelastisches Verhalten zeigt, muß die Rückstellkraft des elastischen Bereichs deutlich kleiner sein als die Rückstellkraft des superelastischen Bereichs.

Die Herstellung von homogenen Blechen und Drähten aus superelastischen Formgedächtniswerkstoffen ist aufgrund der schlechten Verformbarkeit sowie aufgrund der aufwendigen Präparationen des superelastischen Effekts sehr kostenintensiv. Daher werden zunehmend Schichtverbunde mit Formgedächtnisschichten eingesetzt.

Die Herstellung von Formgedächtnisschichten mit superelastischem Effekt, die auf ein Polymer mit niedriger Steifigkeit aufgebracht werden, erfolgt bisher üblicherweise durch physikalische Abscheidemethoden, vorzugsweise durch Sputtern. Das Sputtern ist ein Beschichtungsverfahren, das auch Kathodenzerstäubung genannt wird. Bei der Herstellung eines Schichtverbundes mit Formgedächtnisschichten und einer eingeschlossenen Polymerschicht treten dabei jedoch erhebliche Probleme auf.

Um mit physikalischen Abscheideverfahren Schichten mit Formgedächtnis herzustellen, müssen die Schichten entweder auf geheizten Substraten abgeschieden oder nachträglich kristallisiert werden. Im ersten Fall sind Temperaturen von mindestens 450°C, im zweiten Fall von ca. 500°C notwendig. In beiden Fällen kommt es zur Beeinträchtigung der Polymerschicht bzw. zur Reaktion der Randbereiche der Polymerschicht mit der Formgedächtnisschicht und damit zu starken Einschränkungen der Formgedächtniseigenschaften.

Darüber hinaus steigt die Qualität der Formgedächtnisschicht mit der angewandten Glühtemperatur. Höhere Temperaturen sind wegen der benötigten Polymerschicht aber nicht möglich, da es in diesem Fall zu einer Zerstörung der Polymerschicht, einer Kontamination der Formgedächtnisschicht und somit zu einer Zerstörung des Schichtverbundes kommt.

Aufgabe der vorliegenden Erfindung ist es daher, ein preiswertes, schnell und einfach durchzuführendes Verfahren der eingangs genannten Art zu schaffen, das die vorstehenden Nachteile vermeidet und eine optimale Qualität der Formgedächtnisschichten ohne Zerstörung angrenzender Polymerschichten ermöglicht.

Diese Aufgabe wird erfindungsgemäß durch ein Verfahren nach Anspruch 1 gelöst. Wesentlich ist dabei, daß zwei Teilschichtverbunde jeweils nach den folgenden Verfahrensschritten hergestellt werden: Auf ein Substrat wird eine Opferschicht aufgebracht, auf die Opferschicht wird eine Formgedächtnisschicht aufgebracht und auf die Formgedächtnisschicht wird eine Polymerschicht aufgebracht. Die beiden Teilschichtverbunde werden jeweils mit der Polymerseite zu einem Schichtverbund zusammengefügt und die beiden Substrate und die beiden Opferschichten werden abschließend insbesondere durch Auflösung der Opferschichten entfernt. Die Opferschichten dienen dabei der besonders leichten Trennung des Schichtverbundes von den Substraten.

Auf diese Weise wird ein einfach und daher preiswert durchzuführendes Herstellungsverfahren bereitgestellt, das eine thermische Behandlung der Formgedächtnisschichten bei hohen Temperaturen gestattet, ohne daß hierbei angrenzende Polymerschichten zerstört werden. Daher sind besonders hohe Qualitäten der Formgedächtnisschichten und somit des gesamten Schichtverbundes erreichbar. Wesentlich ist dabei insbesondere, daß eine thermische Behandlung der Formgedächtnisschichten bei sehr hohen Glühtemperaturen durchgeführt werden kann, bevor das Polymerschicht aufgebracht wird.

Das als Trägersubstanz dienende Substrat kann als Festkörper besonders einfach und kostengünstig z.B. durch ein Blech oder einen Wafer ausgeführt sein. Der Festkörper sollte vorteilhafterweise eine ebene Oberfläche aufweisen und inert gegen die Lösungsmittel, die ggf. zur Auflösung der Opferschicht verwendet werden, sein.

In einer bevorzugten Anwendungsform des erfindungsgemäßen Verfahrens entspricht der Ausdehnungskoeffizient des Substrats zumindest annähernd dem Ausdehnungskoeffizienten der Formgedächtnisschicht. Auf diese Weise können unerwünschte Spannungen bei der thermischen Behandlung der Formgedächtnisschicht auf ein Minimum reduziert oder sogar vollständig vermieden werden.

Besonders vorteilhaft ist es, wenn für die Formgedächtnisschicht eine Legierung auf der Basis von Titan und Nickel verwendet wird. Als weitere Legierungselemente können Kupfer oder Palladium zugefügt werden. Alternativ können auch z.B. Legierungen auf der Basis von Kupfer, Aluminium und Zink für die Formgedächtnisschichten verwendet werden.

Insbesondere im medizinischen Bereich ist der Schichtverbund besonders universell einsetzbar, wenn die Formgedächtnisschicht mit einer Dicke zwischen 0,5 µm und 100 µm vorzugsweise mit einer Dicke zwischen 1 µm und 50 µm aufgebracht wird.

Optimale Qualitäten der Formgedächtnisschichten können dadurch erreicht werden, daß die Formgedächtnisschichten im Teilschichtverbund mit dem Substrat und der Opferschicht thermisch behandelt, insbesondere zwischen 500° C und 800° C geglüht werden.

Das Verfahren gestattet vorteilhafterweise ferner ggf. die Teilschichtverbunde vor dem Zusammenfügen zu dem Schichtverbund fotolithografisch zu strukturieren. Auch können der Schichtverbund oder die Teilschichtverbunde mechanisch, insbesondere durch Schneiden oder Stanzen strukturiert und/oder konturiert werden.

In einer bevorzugten Ausführungsform des erfindungsgemäßen Verfahrens wird die Polymerschicht durch Spincoaten auf die Formgedächtnisschicht aufgebracht. Dieses Aufbringungsverfahren ist bei polymeren Kunststoffen besonders vorteilhaft anwendbar und entspricht dem an sich bekannten Lackschleuderverfahren.

Besonders vorteilhaft ist es, wenn als Substrat ein Festkörper, vorzugsweise aus Aluminiumoxid verwendet wird. Wichtig ist dabei, daß der Festkörper beständig gegenüber den Glühtemperaturen der Wärmebehandlung der Formgedächtnisschichten ist.

Besonders vorteilhaft ist es ferner, wenn die Opferschicht aus einer Legierung mit Eisen und Kobalt und/oder wenn sie durch Sputtern auf das Substrat aufgebracht wird.

Auf besonders einfache Weise können die Opferschichten und das Substrat von dem Schichtverbund entfernt werden, indem die Opferschichten aus säureunbeständigem Material bestehen und mittels Säure, vorzugsweise mittels verdünnter Salpetersäure aufgelöst werden.

Ein nach dem erfindungsgemäßen Verfahren hergestellter Schichtverbund mit superelastischem Spannungsdehnungsverhalten kann insbesondere in der Medizintechnik vielfache Anwendungsgebiete finden. So können hierbei beispielsweise die bei zur Korrektur der Zahnstellung eingesetzten herkömmlichen Zahnspangen mehrfach erforderlichen und für den Patienten oftmals schmerzhaften Nachjustierungen entfallen, da auch nach Veränderung der Zahnstellung die durch eine superelastische Spange aufgebrachte Kraft konstant bleibt.

Weitere Vorteile und Merkmale der Erfindung ergeben sich aus den Unteransprüchen sowie aus der nachfolgenden Beschreibung des in den Zeichnungen dargestellten Ausführungsbeispiels. Dabei zeigen:

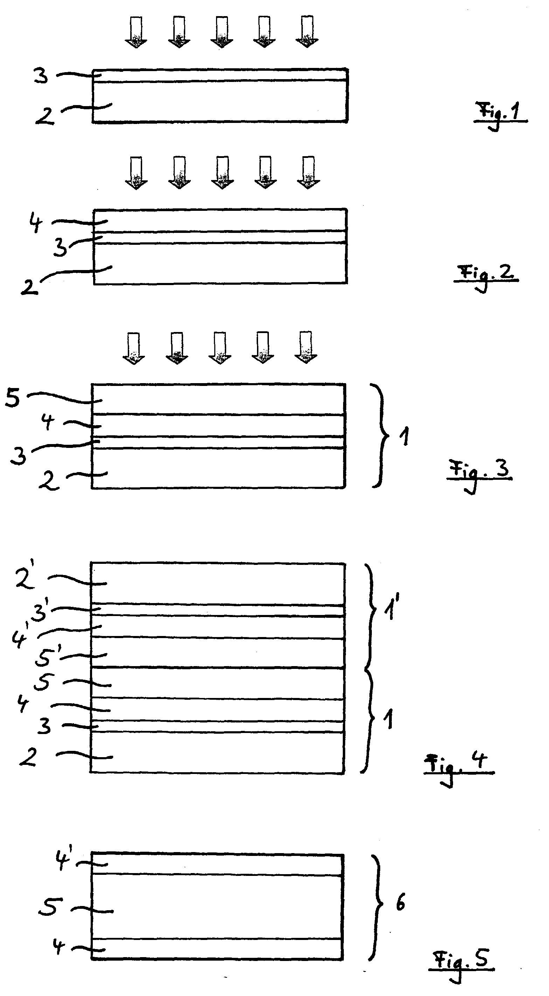

- Figur 1 bis 3:: Herstellung eines Teilschichtverbundes,
- Figur 4:: Zusammenfügen zweier Teilschichtverbunde,
- Figur 5:: einen fertigen Schichtverbund.

Zum Herstellen eines Teilschichtverbundes 1 wird zunächst auf ein Substrat 2 aus z.B. Aluminiumoxid eine dünne Opferschicht 3 auf Basis einer Eisen-Kobalt-Legierung durch Sputtern aufgebracht. Das Substrat 2 hat eine Dicke von ca. 5 mm und die Opferschicht 3 wird so dünn wie möglich, beispielsweise mit einer Dicke von 0,2 µm aufgebracht.

In einem zweiten Verfahrensschritt wird auf die Opferschicht 3 eine Formgedächtnisschicht 4 mit einer Dicke von 25 µm aufgebracht. Die Formgedächtnisschicht 4 besteht aus einer Legierung auf der Basis von Titan und Nickel.

In diesem Zustand können die noch nicht fertiggestellten Teilschichtverbunde 1 einer Wärmebehandlung unterzogen werden. Das erst später aufgebrachte Polymer wird somit nicht zerstört oder beschädigt.

In einem dritten Verfahrensschritt wird auf die Formgedächtnisschicht 4 eine Polymerschicht 5 durch Spincoaten aufgebracht. Als Polymer, insbesondere als Elastomer kann vorzugsweise Polyimit verwendet werden. Die Polymerschicht 5 wird mit einer Dicke von 100 µm aufgetragen.

Auf diese Weise werden separat voneinander zwei Teilschichtverbunde 1 und 1' hergestellt, die anschließend jeweils mit der Polymerschicht 5 aneinanderliegend zusammengefügt werden (Figur 4).

In einem letzten Verfahrensschritt werden die beiden außenliegenden Bleche 2 und 2' durch Auflösen der beiden Opferschichten 3und 3' in Salpetersäure entfernt, so daß der fertige Schichtverbund 6 hergestellt ist (Figur 5). Der Schichtverbund 6 hat eine zentrale Elastomerschicht 5 mit einer Dicke von 200 µm an die sich außenseitig jeweils eine Formgedächtnisschicht 4 bzw. 4' mit einer Dicke von 25 µm anschließt.

Abschließend kann der Schichtverbund 6 mechanisch durch Stanzen und/oder Schneiden strukturiert bzw. in die für die gewünschte Anwendung benötigte Form gebracht werden. Der nach diesem erfindungsgemäßen Verfahren auf einfache und kostengünstige Weise hergestellte Schichtverbund 6 weist eine zerstörungsfreie Elastomerschicht 5 auf und eröffnet insbesondere aufgrund der kostengünstigen Herstellbarkeit bei gleichzeitig hoher Qualität neue Einsatzbereiche für superelastische Schichtverbunde.

## Patentansprüche

1. Verfahren zur Herstellung von Schichtverbunden mit zwei Formgedächtnisschichten mit superelastischem Spannung-Dehnung-Verhalten und einer elastischen Zwischenschicht, **gekennzeichnet durch**
folgende Verfahrensschritte:
- es werden zwei Teilschichtverbunde (1, 1') jeweils nach den folgenden Verfahrensschritten hergestellt:
- auf ein Substrat (2) wird eine Opferschicht (3) aufgebracht,
- auf die Opferschicht (3) wird eine Formgedächtnisschicht (4) aufgebracht,
- auf die Formgedächtnisschicht (4) wird eine Polymerschicht (5) aufgebracht;
- die beiden Teilschichtverbunde (1, 1') werden jeweils mit der Polymerseite (5, 5') aneinanderliegend zu einem Schichtverbund (6) zusammengefügt, und
- die beiden Substrate (2, 2') und die beiden Opferschichten (3, 3') werden entfernt.

2. Verfahren nach Anspruch 1, **dadurch gekennzeichnet,** daß die Polymerschichten (5, 5') der beiden Teilschichtverbunde (1, 1') durch Kleben, Vulkanisieren oder Tempern miteinander verbunden werden.

3. Verfahren nach Anspruch 1 oder 2, **dadurch gekennzeichnet,** daß der Ausdehnungskoeffizient des Substrats (2) zumindest annähernd dem Ausdehnungskoeffizient der Formgedächtnisschicht (4) entspricht.

4. Verfahren nach einem der vorherigen Ansprüche, **dadurch gekennzeichnet,** daß die Formgedächtnisschicht (4) eine Legierung mit Titan und Nickel ist.

5. Verfahren nach einem der vorherigen Ansprüche, **dadurch gekennzeichnet,** daß die Formgedächtnisschicht (4) mit einer Dicke zwischen 0,5 µm und 100 µm, vorzugsweise zwischen 1 µm und 50 µm aufgebracht wird.

6. Verfahren nach einem der vorherigen Ansprüche, **dadurch gekennzeichnet,** daß der Teilschichtverbund (1) mit der Formgedächtnisschicht (4) vor dem Aufbringen der Polymerschicht (5) thermisch behandelt, insbesondere zwischen 500 °C und 800 °C geglüht wird.

7. Verfahren nach einem der vorherigen Ansprüche, **dadurch gekennzeichnet,** daß die Teilschichtverbunde (1) vor dem Zusammenfügen zu dem Schichtverbund (6) photolithographisch strukturiert werden.

8. Verfahren nach einem der vorherigen Ansprüche, **dadurch gekennzeichnet,** daß der Schichtverbund (6) oder die Teilschichtverbunde (1) mechanisch, insbesondere durch Schneiden oder Stanzen strukturiert und/oder konturiert werden.

9. Verfahren nach einem der vorherigen Ansprüche, **dadurch gekennzeichnet,** daß die Polymerschicht (5) durch Spincoaten aufgebracht wird.

10. Verfahren nach einem der vorherigen Ansprüche, **dadurch gekennzeichnet,** daß als Substrat (2) ein Festkörper, vorzugsweise aus Aluminiumoxid verwendet wird.

11. Verfahren nach einem der vorherigen Ansprüche, **dadurch gekennzeichnet,** daß die Opferschicht (3) aus einer Legierung mit Eisen und Kobalt besteht.

12. Verfahren nach einem der vorherigen Ansprüche, **dadurch gekennzeichnet,** daß die Opferschicht (3) durch Sputtern auf das Substrat (2) aufgebracht wird.

13. Verfahren nach einem der vorherigen Ansprüche, **dadurch gekennzeichnet,** daß die Opferschicht (3) in Säure, vorzugsweise in verdünnter Salpetersäure aufgelöst wird.

14. Schichtverbund mit zwei Formgedächtnisschichten mit superelastischem Spannungs-Dehnungs-Verhalten und einer elastischen Zwischenschicht, **dadurch gekennzeichnet,** daß er gemäß einem Verfahren nach einem der vorherigen Ansprüche hergestellt ist.
